# EUROPEAN PATENT SPECIFICATION

(11) **EP 0 389 279 B1**
(45) Date of publication and mention of the grant of the patent: **14.05.1997**
(21) Application number: 90303079.9
(22) Date of filing: 22.03.1990
(51) Int. Cl.: G11B 23/04, G11B 23/08

(54) **A tape cassette having a front lid and a back lid**
Bandkassette mit vorderer und rückwärtiger Verschlussklappe
Cassette à bande ayant un volet frontal et un volet arrière

(30) Priority: 24.03.1989 JP 73449/89
(43) Date of publication of application: 26.09.1990
(73) Proprietor: SONY CORPORATION, Tokyo 141 (JP)
(72) Inventor: Iwahashi, Yuji c/o Patents Division, Shinagawa-ku, Tokyo 141 (JP)
(74) Representative: Purvis, William Michael Cameron

(56) References cited:
- AT-B- 377 376
- AT-B- 379 462

## Description

The invention relates to a tape cassette having an outer-lid and an inner-lid.

Tape cassettes have been proposed having a dual lid, that is to say an outer-lid and an inner-lid with magnetic tape extending across the front wall of a cassette housing, so as to cross a bottom opening of the cassette housing, and accommodated in a space formed by the outer-lid and the inner-lid.

Generally, in a helical scan system recording and/or reproducing apparatus such as a videotape cassette recorder, magnetic tape is withdrawn from a tape cassette and obliquely wrapped around the drum of a recording and/or playback head. To allow this, a bottom opening is formed at the front of the cassette housing and a tape withdrawing means contained in the videotape cassette recorder is inserted into the bottom opening thereby to withdraw the magnetic tape from the tape cassette.

The magnetic tape extends across the front wall of the cassette housing so as to cross the bottom opening of the tape cassette so that, if the tape remains in that extended condition, there is a substantial possibility that the tape will be damaged or smudged. For this reason, in order to protect the magnetic tape, the tape cassette is provided with an outer-lid to protect the portion of the magnetic tape extended across the front wall.

However, even where an outer-lid is present, a magnetic tape may be smudged by fingerprints if a finger is inserted into the cassette housing through the bottom opening. To prevent this, in tape cassettes containing a tape 8 mm wide, for use in a so-called 8 mm videotape cassette recorder, a second or inner-lid is attached to the rear side of the outer-lid. In such a tape cassette, when the outer-lid is closed, the inner-lid is also closed in a ganged relation therewith, forming a space between the outer-lid and the inner-lid in which the magnetic tape is accommodated, thereby more fully protecting the magnetic tape.

Our Patent Specification GB-A-2 115 782 discloses all the features of the preamble of claim 1, and particularly a tape cassette with an outer-lid and an inner-lid so shaped that when the two lids are in closed positions the tape extending across a front wall of the cassette is housed in a space between the lids, guide means being provided to control the attitude of the inner-lid during opening and closing movements thereof such that a clearance is maintained between a bottom edge of the inner-lid and an upper edge of the tape at all times.

In such a dual-lid cassette, when the outer-lid and inner-lid are rotated in their closing directions, the clearance between the top of the inner-lid and the upper edge of the magnetic tape is very small. Thus, if the magnetic tape is slightly slack or if the speed at which the tape cassette is ejected from the video tape recorder is high, shock brought about by the elevation of a cassette compartment may cause the top of the inner-lid to touch the tape edge. If this happens, there is a substantial possibility that the magnetic tape will be folded down and the magnetic tape damaged. In particular, in a vapour-deposited tape, a magnetic layer of the tape is formed of a metal layer, and very slight damage to the tape may cause a crack in the vapour-deposited metal layer. Such a crack appears as noise when the picture corresponding to the video signal on that portion of the tape is reproduced.

According to the invention there is provided an 8 mm tape cassette (1) containing a magnetic tape (15) which extends across a front wall (20) of the cassette (1), comprising:
(a) a cassette housing (10);
(b) an outer-lid (23) rotatably attached to the cassette housing (10);
(c) an inner-lid (32) rotatably attached to the outer-lid (23) and shaped such that when the outer-lid (23) and the inner-lid (32) are both in a closed position, the tape (15) extending across the front wall (2) of the cassette housing (10) is accommodated in a space formed between the outer-lid (23) and the inner-lid (32); and (d) guide means (36, 37) to control the attitude of the inner-lid (32) during opening or closing movement of the inner-lid (32), such that when the inner-lid (32) is in motion, a clearance (L) between a bottom portion (40) of the inner-lid (32) and an upper edge of the tape (15) is maintained, the guide means comprising a groove (37) formed in the inside of the cassette housing (10) with an upper portion of the groove (37) shaped as an arc;
characterised in that;
(e) the magnetic tape (15) is a vapour-deposited tape wherein a magnetic layer of the tape is formed as a metal layer;
(f) the clearance (L) between the bottom portion (40) of the inner-lid (32) and the upper edge of the tape (15) is maintained greater than 1.5 mm; and
(g) the curvature radius (R) of the upper portion of the groove (37) from a rotation centre of the outer-lid (23) is between 5.0 and 6.0 mm.

In such a tape cassette smudging of or damage to the magnetic tape can be avoided, particularly cracking of the metal layer forming the magnetic layer of the magnetic tape can be avoided.

The tape cassette can be suitable for use in a so-called 8 mm video tape recorder.

The invention is diagrammatically illustrated by way of example in the accompanying drawings, in which:-
Figure 1 is a perspective view of a tape cassette for a videotape cassette recorder according to the invention;
Figure 2 is a planar view of a tape cassette according to the invention, illustrating one portion of the tape cassette in a cut-away fashion;
Figure 3 is an exploded, perspective view of a portion of a tape cassette according to the invention, illustrating the attachment of an outer-lid and an inner-lid;
Figure 4 is a diagrammatic view of a section of a tape cassette according to the invention, showing the tape cassette when the outer-lid is open; and
Figure 5 is a diagrammatic view of a section of the tape cassette according to the invention, showing the tape cassette when the outer-lid is closed.

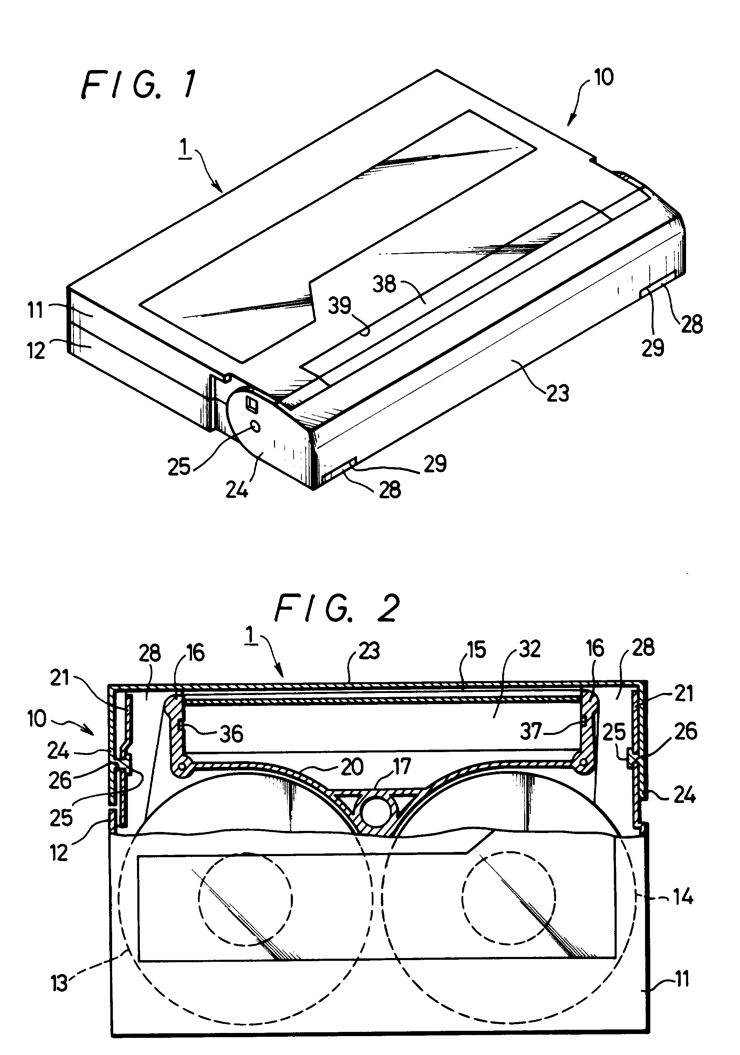

Referring to Figures 1 and 2, a tape cassette 1 for a videotape cassette recorder includes a cassette housing 10 comprising an upper cassette half 11 and a lower cassette half 12. A pair of tape reels 13 and 14 are rotatably accommodated within the cassette housing 10, and a magnetic tape 15, for example 8 mm wide, is wound around the tape reels 13 and 14. The tape 15 is a vapour-deposited tape in which a magnetic layer of the tape is a metal layer formed by a vapour-deposition-process. The magnetic tape 15 wound around the pair of tape reels 13 and 14 is guided by a pair of tape guides 16 provided at left and right front end portions of the lower cassette half 12 so that the tape 15 extends across the cassette housing 10 so as to cross a bottom opening 17.

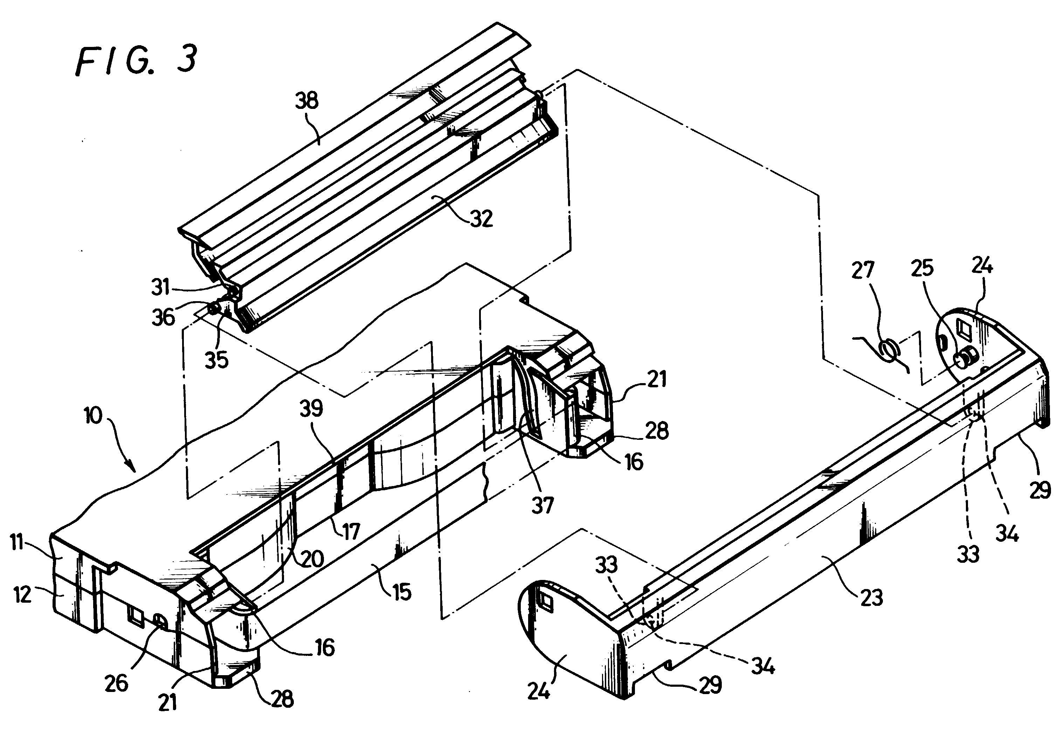

The back of the bottom opening 17 is formed by a front wall 20. As shown in Figures 2 and 3, a pair of left and right hollow projections 21 of rectangular tubular form protrude forward from the respective sides of the front wall 20. The tape guides 16 are formed on the front of the inner side plates of the hollow projections 21 and the magnetic tape 15 extends from the tape cassette 1 through the open ends of the hollow projections 21 and is stretched across the bottom opening 17 as shown in Figure 3. An outer-lid 23 is attached to the cassette housing 10 so as to protect the magnetic tape 15 as will be described below.

As shown in Figures 2 and 3, the outer-lid 23 has side plates 24 unitarily formed at the respective sides thereof and pins 25 on the respective inner surfaces of these side plates 24 are inserted into openings 26 formed in the cassette housing 10 where the upper and lower cassette halves 11 and 12 are joined. Thus, the outer-lid 23 is rotatably supported by the cassette housing 10. Coil springs 27 are engaged with the pins 25, and spring-bias the outer-lid 23 in its closing direction. Engagement portions 28 extend forward from the lower surfaces of the hollow projections 21 and are received in recesses 29 formed in the lower edge portions of the respective sides of the outer-lid 23.

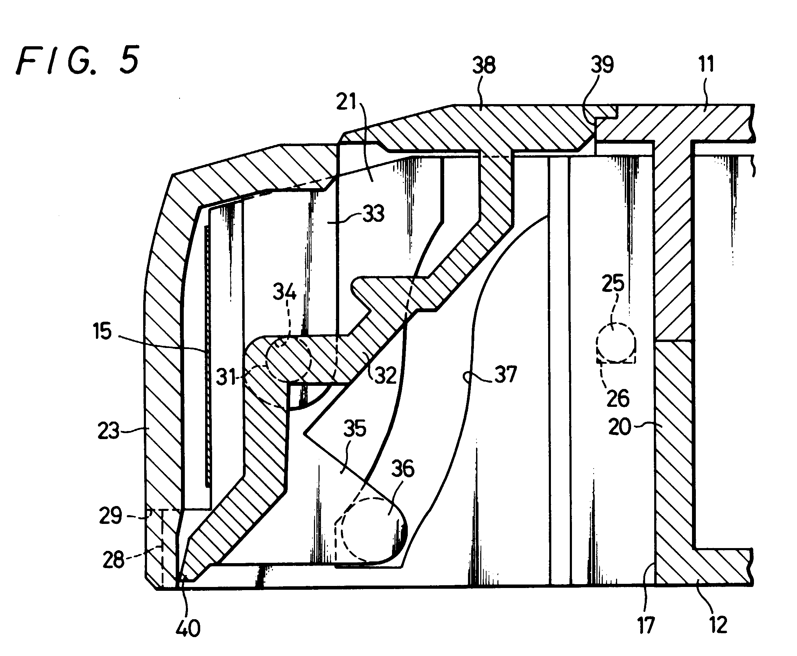

An inner-lid 32 is attached to the cassette housing 10 to the rear of the outer-lid 23 as shown in Figures 3 and 5. The inner-lid 32 has pins 31 provided at the respective sides thereof, which are respectively engaged with pin apertures 34 formed through support plates 33 provided on the outer-lid 23, whereby the inner-lid 32 is rotatably supported on the outer-lid 23. The inner-lid 32 has arms 35 projecting rearwardly from the respective sides thereof. Pins 36 on the arms 35 are respectively engaged with guide grooves 37 formed on the inside surfaces of the hollow projections 21. A top plate 38 is provided on the top portion of the inner-lid 32, which is received by an upper recess 39 formed on the upper cassette half 11 of the cassette housing 10, as shown in Figure 5.

When the tape cassette 1 is ejected from a videotape cassette recorder, the outer-lid 23 is closed so as to cover the magnetic tape 15 extending across the front wall 20 of the cassette housing 10 as shown in Figures 1 and 5. As shown in Figure 5, the magnetic tape 15 is accommodated within a space between the outer-lid 23 and the inner-lid 32, i.e. within a closed space formed by the outer-lid 23, the inner-lid 32 and the top plate 38 of the inner-lid 32. In this configuration, the magnetic tape 15 is protected from being smudged by fingerprints from the outside. Thus, when the tape cassette 1 is not in use, the magnetic tape 15 can be positively prevented from being damaged or smudged by a foreign substance.

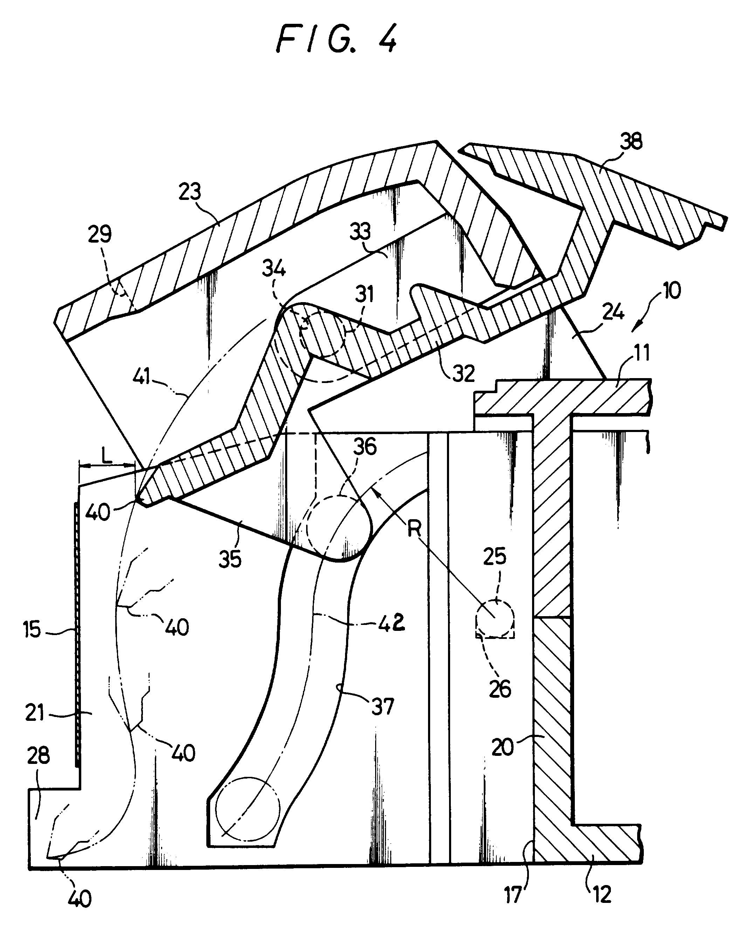

When the tape cassette 1 is loaded into a videotape cassette recorder, the outer-lid 23 is rotated around the pins 25 in the clockwise direction (as viewed in Figures 4 and 5) by opening means contained in the recorder (not shown). As shown in Figure 4, in this configuration the magnetic tape 15 extending within the outer-lid 23 of the cassette housing 10 is exposed. Since the inner-lid 32 is rotatably attached to the outer-lid 23 via the support plates 33 and the pins 31, the inner-lid 32 is also rotated as the outer-lid 23 is rotated. The attitude of the inner-lid 32 during rotation is controlled by the guide grooves 37 formed on the inside surfaces of the hollow projections 21. For example, a bottom edge portion 40 of the inner-lid 32 is moved along a loci shown by a two-dot chain line 41 in Figure 4.

Thus, when the outer-lid 23 and the inner-lid 32 are both rotated in their opening direction, the magnetic tape 15 is exposed and may be caught by tape withdrawing means in the videotape cassette recorder (not shown), which is inserted into the cassette housing 10 through the bottom opening 17. Consequently, the magnetic tape 15 is wrapped around a rotary tape head mounted on a head drum, so that a helical scan system for recording and/or reproduction may be engaged.

When the tape cassette 1 is ejected from the videotape cassette recorder, the outer-lid 23 and the inner-lid 32 are closed, changing positions from those shown in Figure 4 to those shown in Figure 5. In this operation, the outer-lid 23 is rotated around the pins 25 in the counter-clockwise direction. The inner-lid is also rotated in a ganged relation with the outer-lid 23, and the attitude of the inner-lid 32 is controlled by the guide groove 37. The upper portion of the guide groove 37 is arcuate and the centre of the guide groove 37, shown by a one-dot chain line 42, is concentric with the rotation centre of the outer-lid 23 defined by the pins 25 and the curvature radius R (see Figure 4) of the arcuate portion of the guide groove 37 is in a range of from 5.0 to 6.0 mm. In this configuration, when the inner-lid 32 is rotated in the closing direction as shown in Figure 4, a clearance L which is greater than 1.5 mm is maintained between the bottom edge portion 40 of the inner-lid 32 and the upper edge of the magnetic tape 15. This clearance prevents the bottom edge 40 of the inner-lid 32 from interfering with and damaging the magnetic tape 15 even if the magnetic tape 15 is slightly slack.

Further, even if the tape cassette is ejected from the cassette compartment of the videotape cassette recorder at very high speed and the tape cassette is shocked by ejection, the chance of the upper edge of the magnetic tape 15 coming into contact with the bottom edge portion 40 of the inner-lid 32 is considerably lowered. Thus, the risk that the magnetic tape 15 will be damaged becomes negligible.

It is thus possible to prevent a crack from being produced in the metal film on the surface of the vapour-deposited magnetic tape by preventing the bottom edge portion 40 of the inner-lid 32 from interfering with the tape 15. At the time that this invention was made it was appreciated that magnetic tape of the vapour-deposited kind tends to be subjected to a so-called cupping phenomenon in which the magnetic tape is curved into an arc so that the intermediate portion of the magnetic tape 15 across its width protrudes forward such that the magnetic tape 15 is more likely to contact the bottom edge portion 40 of the inner-lid 32. However, selecting the clearance L to be more than 1.5 mm as described above ensures that no such contact will occur, even when the cupping phenomenon occurs in the magnetic tape 15. The magnetic tape 15 can thus be prevented from being damaged.

The shape of the outer-lid 23 and the inner-lid 32, and the shape of guides 16, are selected so that when the outer-lid is closed the clearance between the bottom edge of the inner-lid and the upper edge of the magnetic tape will be more than 1.5 mm. Thus, when the inner-lid is rotated in the closing direction in a ganged relation with the outer-lid, the magnetic tape does not contact the bottom edge portion of the inner-lid 32, and damage to the metal layer of the vapour-deposited tape is prevented.

## Claims

1. An 8 mm tape cassette (1) containing a magnetic tape (15) which extends across a front wall (20) of the cassette (1), comprising:
(a) a cassette housing (10);
(b) an outer-lid (23) rotatably attached to the cassette housing (10);
(c) an inner-lid (32) rotatably attached to the outer-lid (23) and shaped such that when the outer-lid (23) and the inner-lid (32) are both in a closed position, the tape (15) extending across the front wall (2) of the cassette housing (10) is accommodated in a space formed between the outer-lid (23) and the inner-lid (32); and
(d) guide means (36, 37) to control the attitude of the inner-lid (32) during opening or closing movement of the inner-lid (32), such that when the inner-lid (32) is in motion, a clearance (L) between a bottom portion (40) of the inner-lid (32) and an upper edge of the tape (15) is maintained, the guide means comprising a groove (37) formed in the inside of the cassette housing (10) with an upper portion of the groove (37) shaped as an arc;
characterised in that;
(e) the magnetic tape (15) is a vapour-deposited tape wherein a magnetic layer of the tape is formed as a metal layer;
(f) the clearance (L) between the bottom portion (40) of the inner-lid (32) and the upper edge of the tape (15) is maintained greater than 1.5 mm; and
(g) the curvature radius (R) of the upper portion of the groove (37) from a rotation centre of the outer-lid (23) is between 5.0 and 6.0 mm.

## Revendications

1. Cassette de bande (1) de 8 mm contenant une bande magnétique (15) qui s'étend en travers d'une paroi avant (20) de la cassette (1), comprenant :
(a) un boîtier de cassette (10) ;
(b) un volet extérieur (23) monté rotatif sur le boîtier de cassette (10) ;
(c) un volet intérieur (32) monté rotatif sur le volet extérieur (23) et conformé de manière que, lorsque le volet extérieur (23) et le volet intérieur (32) sont tous deux dans une position fermée, la bande (15) qui s'étend en travers de la paroi avant (2) du boîtier de cassette soit logée dans un espace formé entre le volet extérieur (23) et le volet intérieur (32) ; et
(d) des moyens de guidage (36, 37) servant à commander l'attitude du volet intérieur (32) pendant le mouvement d'ouverture ou de fermeture du volet intérieur (32), de telle manière que, lorsque le volet intérieur (32) est en mouvement, il subsiste un dégagement (L) entre la partie inférieure (40) du volet intérieur (32) et le bord supérieur de la bande (15), les moyens de guidage comprenant une gorge (37) formée dans le volume intérieur du boîtier de cassette (10), la partie supérieure de la gorge (37) étant en forme d'arc ;
caractérisé en ce que ;
(e) la bande magnétique (15) est une bande formée par dépôt en phase vapeur, dans laquelle la couche magnétique de la bande est constituée par une couche de métal ;
(f) le dégagement (L) entre la partie inférieure (40) du volet intérieur (32) et le bord supérieur de la bande (15) reste maintenu supérieur à 1,5 mm,
(g) le rayon de courbure (R) de la partie supérieure de la gorge (37), mesuré à partir du centre de rotation du volet extérieur (23) est d'entre 5,0 et 6,0 mm.

## Patentansprüche

1. 8mm-Bandkassette (1), die ein Magnetband (15) enthält, welches sich quer zu einer Vorderwand (20) der Kassette (1) erstreckt, mit:
(a) einem Kassettengehäuse (10);
(b) einer Außenklappe (23), die drehbar am Kassettengehäuse (10) befestigt ist;
(c) einer Innenklappe (32), die drehbar an der Außenklappe (23) befestigt ist und so geformt ist, daß, wenn die Außenklappe (23) und die Innenklappe (32) beide in einer Schließposition sind, das Band (15), welches sich quer zur Vorderwand (2) des Kassettengehäuses (10) erstreckt, in einem Zwischenraum untergebracht ist, der zwischen der Außenklappe (23) und der Innenklappe (32) gebildet ist; und
(d) einer Führungseinrichtung (36, 37), um die Stellung der Innenklappe (32) während der Öffnungs- oder Schließbewegung der Innenklappe (32) zu steuern, so daß, wenn die Innenklappe (32) in Bewegung ist, eine Lücke (L) zwischen einem Bodenteil (40) der Innenklappe (32) und einem oberen Rand des Bandes (15) beibehalten wird, wobei die Führungseinrichtung eine Nut (37) besitzt, die in der Innenseite des Kassettengehäuses (10 gebildet ist, wobei ein oberer Teil der Nut (37) als Bogen ausgebildet ist;
**dadurch gekennzeichnet, daß**
(e) das Magnetband (15) ein dampfbeschichtetes Band ist, wobei eine Magnetschicht des Bandes als eine Metallschicht gebildet ist;
(f) die Lücke (L) zwischen dem Bodenteil (40) der Innenklappe (32) und dem oberen Rand des Bandes (15) so beibehalten wird, daß sie größer als 1,5 mm ist; und
(g) der Krümmungsradius (R) des oberen Teils der Nut (37) von einer Drehachse der Außenklappe (23) zwischen 5,0 und 6,0 mm beträgt.
